# EUROPEAN PATENT APPLICATION

(11) **EP 1 925 829 A1**
(43) Date of publication of application: **28.05.2008**
(21) Application number: 06425790.0
(22) Date of filing: 21.11.2006
(51) Int. Cl.: F16B 35/04

(54) **A metal clamping screw for plastic component**

(71) Applicant: MAGNETI MARELLI POWERTRAIN S.p.A., 20011 Corbetta (IT)
(72) Inventor: Cominetti Paolo, 40137 Bologna (IT); Giovannini Flavio, 40033 Casalecchio Di Reno (IT); Ferrarese, Cecilia Elisa, 40128 Bologna (IT)
(74) Representative: Jorio, Paolo

(57) **Abstract**

A metal clamping screw (1) to be inserted within a through-hole (2) of a plastic component (3); the clamping screw (1) displays a head (4) having a diameter greater than the diameter of the through-hole (2) and a rod (5) having a diameter smaller than the diameter of the through-hole (2) and a threaded lower portion (6); an intermediate portion (7) is provided between the head (4) and the rod (5), which has no threads and displays a diameter smaller than the diameter of the head (4), greater than the diameter of the rod (5) and equal to the diameter of the through-hole (2).

## Description

### TECHNICAL FIELD

The present invention relates to a metal clamping screw for plastic components.

The present invention may advantageously be applied to the assembly of components of an internal combustion engine, to which the following description will explicitly refer without however loosing generality.

### BACKGROUND ART

Modern internal combustion engines display a high number of moulded plastic components, because a moulded plastic component is generally more cost-effective (especially when the component has a complex shape) and lighter than an equivalent metal component in the case high mechanical and/or thermal resistance are not required. For instance, the suction manifold of an internal combustion engine is virtually always designed in a moulded plastic material, because the suction manifold displays an elaborate shape and is neither exposed to mechanical stresses nor to thermal stresses.

The plastic components are clamped to one another and are clamped to their supports by means of metal clamping screws so as to allow the subsequent disassembly of the plastic components themselves during maintenance or repair operations. For such a purpose, the plastic components display through-holes within each of which a clamping screw is placed, which is screwed in an underlying threaded dead hole which is aligned with the through-hole. Before inserting a clamping screw within a through-hole of a plastic component, it is required to insert a metal bush within the through-hole itself, which serves to distribute the pressure exerted by the clamping screw head on the external surface of the plastic component; in virtue of the presence of the metal bush, "creep" mechanisms are avoided in the plastic component, i.e. a local plastic deformation of the plastic component is avoided below the head of the clamping screw. It must be noted that a possible local plastic deformation of the plastic component below the head of the screw is particularly detrimental, because it leads to the loss of clamping force from the clamping screw and thus to a subsequent partial detachment of the plastic component.

However, the need to insert the bushes within the through-holes of the plastic components increases the total cost of the plastic components themselves, both as an effect of the provisioning costs for the bushes and as an effect of the costs deriving from the assembly of the bushes.

### DISCLOSURE OF THE INVENTION

It is the object of the present invention to provide a metal clamping screw for plastic components, which clamping screw being free from the above described drawbacks and, especially, it being easy and cost-effective to implement.

According to the present invention there is provided a metal clamping screw for plastic components according to that claimed in the accompanying claims.

### BRIEF DESCRIPTION OF THE DRAWINGS

The present invention will now be described with reference to the accompanying drawings, which show a non-limitative example of embodiment thereof, in which:
- figure 1 is a side view of a metal clamping screw made according to the present invention;
- figure 2 is a plan view of the clamping screw in figure 1;
- figure 3 is a side sectional view of a portion of a plastic component clamped by means of the clamping screw in figure 1; and
- figure 4 is a side view of a variant of the clamping screw in figure 1; and
- figure 5 is a plan view of the clamping screw in figure 4.

### PREFERRED EMBODIMENTS OF THE INVENTION

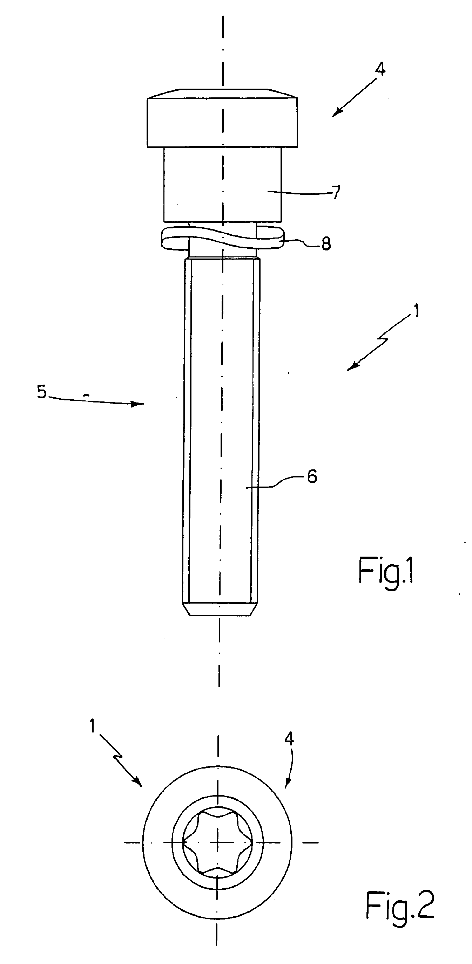

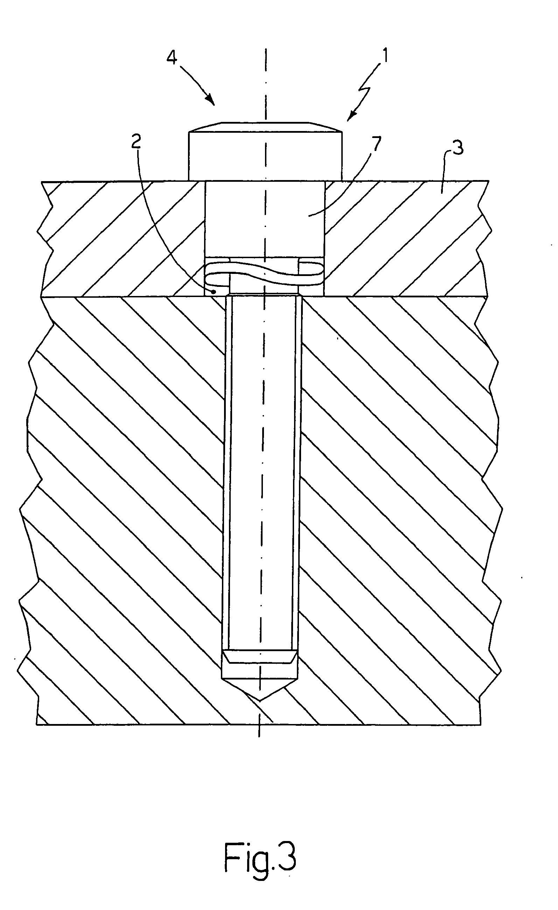

In figure 1, numeral 1 indicates, as a whole, a metal clamping screw (typically formed by steel) to be inserted within a through-hole 2 of a plastic component 3 (shown in figure 3).

The clamping screw 1 comprises a head 4 displaying a diameter greater than the diameter of the through-hole 2, and a rod 5 displaying a diameter smaller than the diameter of the through-hole 2 and having a threaded lower portion 6.

Furthermore, the clamping screw 1 comprises an intermediate portion 7, which is arranged between the head 4 and the rod 5 and has no threads; the intermediate portion 7 displays a diameter, which is smaller than the diameter of the head 4, greater than the diameter of the rod 5, and is substantially equal to the diameter of the through-hole 2.

According to the embodiment shown in figure 1, the clamping screw 1 also comprises a non-return washer 8, which is made in an elastic material and is arranged around the rod 5 immediately below the intermediate portion 7. Preferably, the non-return washer 8 displays an external diameter equal to the diameter of the intermediate portion 7 and is arranged at a non threaded portion of the rod 5.

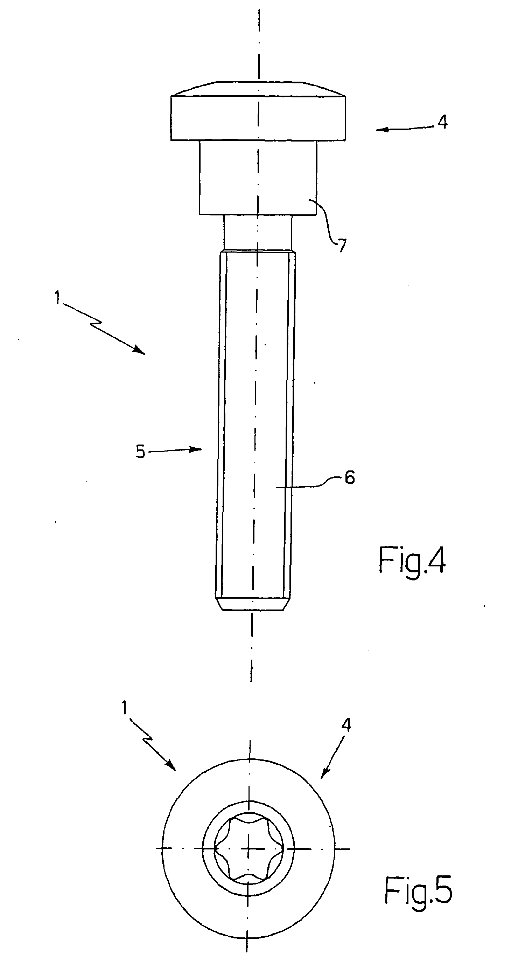

According to the alternative embodiment shown in figure 4, the clamping screw 1 has no non-return washer 8.

Experimental evidence has demonstrated that, in virtue of the presence of the intermediate portion 7 which engages the through-hole 2 of the plastic component 3, the stress exerted by the head 4 of the clamping screw 1 on the external surface of the plastic component 3 does not determine "creep" mechanisms in the plastic component 3 itself, i.e. a local plastic deformation of the plastic component 3 below the head 4 of the clamping screw 1 is avoided.

The above described clamping screw 1 displays many advantages, because it is easy and cost-effective to implement and at the same time, in virtue of the presence of the intermediate portion 7, it allows to avoid the use of a metal bush with a considerable reduction of the total costs of the plastic component 3.

## Claims

1. A metal clamping screw (1) to be inserted within a through-hole (2) of a plastic component (3); the clamping screw (1) comprises:
a head (4) displaying a diameter greater than the diameter of the through-hole (2); and
a rod (5) displaying a diameter smaller than the diameter of the through-hole (2) and having a threaded lower portion (6);
the clamping screw (1) is **characterised in that** it comprises an intermediate portion (7), which is arranged between the head (4) and the rod (5), has no threads, and displays a diameter smaller than the diameter of the head (4), greater than the diameter of the rod (5) and equal to the diameter of the through-hole (2).

2. A clamping screw (1) according to claim 1, comprising a non-return washer (8), which is arranged around the rod (5) immediately below the intermediate portion (7).

3. A clamping screw (1) according to claim 2, wherein the non-return washer (8) displays an external diameter equal to the diameter of the intermediate portion (7).

4. A clamping screw (1) according to claim 2 or 3, wherein the non-return washer (8) is arranged at a non-threaded portion of the rod (5).
